**Europäisches Patentamt**

**European Patent Office**

**Office européen des brevets**

(11) Veröffentlichungsnummer: **0 025 564**
**A2**

(12) ## EUROPÄISCHE PATENTANMELDUNG

(21) Anmeldenummer: **80105288.7**

(22) Anmeldetag: **04.09.80**

(51) Int. Cl.³: **G 01 L 9/00**

(30) Priorität: **17.09.79 DE 2937511**

(43) Veröffentlichungstag der Anmeldung: **25.03.81**
**Patentblatt 81/12**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Fromm, Ingrid, Dipl.-Phys., Jawlenskystrasse 10, D-8000 München 71 (DE)**

(54) **Optische Vorrichtung zum Messen geringer Druckdifferenzen mittels Lichtintensitätsänderung.**

(57) Die Erfindung geht von der Erkenntnis aus, daß die Auslenkung einer verspiegelten Membranoberfläche dazu benutzt werden kann, einen über geeignete optische Mittel zugeführten Lichtstrahl vorgegebener Intensität entsprechend dem gemessenen Druck derart abzulenken, daß die Intensität des wieder abzuführenden Lichts in Abhängigkeit von dem gemessenen Druck änderbar ist.

Es ist ein Meßkörper vorgesehen, in dem eine zumindest teilweise verspiegelte Membran derart eingespannt ist, daß sie mit ihrer verspiegelten Fläche in ihrer Ruhelage flächenparallel in einem Abstand, der geringfügig größer als eine zu erwartende Maximalauslenkung der Membran ist, zu einer Stirnfläche einer Gradientenlinse positioniert ist, und bei der die Gradientenlinse derart positioniert ist, daß diese Stirnfläche der Membran außermittig gegenüberliegt, so daß durch durch Druckeinwirkungen verursachte Durchbiegungen der Membran der Strahlengang eines über die andere Stirnfläche mittels Lichtwellenleiter als Eingangsfaser zugeführten Lichtes innerhalb der Gradientenlinse infolge des veränderten Einfallswinkels an der verspiegelten Fläche verschiebbar ist, so daß die Lichtintensität in einer ersten und einer zweiten Ausgangsfaser variabel ist. Die erste Ausgangsfaser betrifft Druckerhöhungen, die zweite Ausgangsfaser betrifft Druckminderungen.

ACTORUM AG

Siemens Aktiengesellschaft       Unser Zeichen
Berlin und München       VPA
                                79 P 7 1 6 9

Optische Vorrichtung zum Messen geringer Druckdifferenzen
mittels Lichtintensitätsänderung

Die Erfindung betrifft eine optische Vorrichtung zum Messen geringer Druckdifferenzen mittels Lichtintensitätsänderung.

Das Messen von Druckdifferenzen erfolgte bisher im wesentlichen durch Manometer, bei denen die Auslenkung einer Membran unmittelbar dazu benutzt wird, eine Anzeigevorrichtung und/oder einen Regelmechanismus zu betätigen. Neben solchen jeweils mit einer Membran ausgestatteten Druck messenden Einrichtungen sind auch andere Druck messende Einrichtungen, wie beispielsweise solche nach dem piezokeramischen Prinzip arbeitende Einrichtungen bekannt. Den nach dem Prinzip der

Pap 1 Kel /14.9.1979

0025564

Membranbiegung arbeitenden Druck messenden Einrichtungen ist gemeinsam, daß sie auf Grund der unmittelbar mechanisch zu übertragenden Meßkraft hinsichtlich ihrer Empfindlichkeit für einige bestimmte Anwendungsfälle nicht ausreichend sind.

Der vorliegenden Erfindung liegt die Aufgabe zugrunde, eine optische Vorrichtung zum Messen g e r i n g e r Druckdifferenzen zu schaffen, bei der ein unmittelbares Abtasten einer Meßkraft nicht erforderlich ist. Darüber hinaus ist es Aufgabe der Erfindung, Druckabweichungen von einem vorbestimmbaren Ausgangsdruck aus nach oben bzw. nach unten über einen ersten bzw. einen zweiten Übertragungsweg zu signalisieren.

Die Erfindung geht von der Erkenntnis aus, daß die Auslenkung einer verspiegelten Membranoberfläche dazu benutzt werden kann, einen über geeignete optische Mittel zugeführten Lichtstrahl vorgegebener Intensität entsprechend dem gemessenen Druck derart abzulenken, daß die Intensität des wieder abzuführenden Lichts in Abhängigkeit von dem gemessenen Druck änderbar ist.

Die der Erfindung zugrundeliegende Aufgabe wird durch eine optische Vorrichtung zum Messen geringer Druckdifferenzen mittels Lichtintensitätsänderung gelöst, bei der eine Gradientenlinse mit einer Linsenlänge, die ein Viertel der Pitchlänge beträgt, vorgesehen ist, deren erster Stirnfläche über eine Eingangsfaser Licht zuführbar und über eine Ausgangsfaser ein Teil des reflektierten Lichts entnehmbar ist, bei der ein Meßkörper vorgesehen ist, in dem eine zumindest teilweise verspiegelte Membran derart eingespannt ist, daß sie mit ihrer verspiegelten Fläche in ihrer Ruhelage flächenparallel in einem Abstand, der geringfügig größer als eine zu erwartende Maximalauslenkung der Membran ist, zu der zweiten Stirnfläche der Gradientenlinse positioniert ist, und bei der die Gradientenlinse derart positioniert ist, daß ihre zweite Stirnfläche der Membran außermittig gegenüber liegt, so daß durch durch Druckeinwirkungen verursachte Durchbiegungen der Membran der Strahlengang des Lichts innerhalb der Gradientenlinse infolge des veränderten Einfallswinkels an ihrer verspiegelten Fläche in Bezug auf einen Bildpunkt auf der ersten Stirnfläche der Gradientenlinse, der bei vorgegebenen Linsenlänge aus einem Ort einer durch die optische Achse der Eingangsfaser repräsentierten Punktlichtquelle gegeben ist, verschiebbar ist.

Die erfindungsgemäße Vorrichtung ist dadurch gekennzeichnet, daß zwischen der Membran und dem Meßkörper eine erste Kammer mit einem ersten Volumen und zwischen der Membran und einer Schutzkappe eine zweite Kammer mit einem zweiten Volumen vorgesehen sind, daß die erste Kammer mit einem druckdichten Verschluß gegenüber der Umgebung isolierbar ist, daß die Eingangsfaser an eine Lichtquelle vorgegebener Lichtleistung angeschlossen ist, daß zusätzlich zu der in einem Ausgangsfaser-Achsabstand von der Achse der Gradientenlinse angeordneten Ausgangsfaser eine weitere Ausgangsfaser in einem verminderten Ausgangsfaser-Achsabstand angeordnet ist, daß der Druck in der ersten Kammer so eingestellt ist, daß die Membran bei einem mittleren in der zweiten Kammer herrschenden Druck innerhalb eines vorgegebenen Druckbereiches ihre Ruhelage einnimmt, und daß die beiden Ausgangsfaser-Achsabstände so gewählt sind, daß der Bildpunkt des Ortes bei mittleren Druck zwischen den beiden Ausgangsfasern, bei erhöhtem Druck im Bereich der Ausgangsfaser und bei vermindertem Druck im Bereich der weiteren Ausgangsfaser liegt, und daß jede der Ausgangsfasern mit einer die übertragene Lichtleistung bewertenden Meßvorrichtung verbunden ist.

Die Erfindung bietet den Vorteil, daß Druckdifferenzen geringer Größe meßbar sind. Darüber hinaus ist der Vorteil gegeben, daß relativ schnelle Druckänderungen auf Grund der geringen Massenträgheit der optischen Vorrichtung – die Membran ist das einzige bewegte Teil – gemessen werden können. Beispielsweise können vorteilhafterweise Schalldruckmessungen vorgenommen werden. Ein weiterer Vorteil ist darin zu sehen, daß Druckabweichungen von einem vorbestimmbaren Ausgangsdruck aus nach oben bzw. nach unten über einen ersten bzw. einen zweiten Übertragungskanal signalisierbar sind. Weiterbildungen der Erfindung sind durch die in den Unteransprüchen angegebenen Merkmale gekennzeichnet. Im folgenden wird die Erfindung an Hand mehrerer, ein Ausführungsbeispiel für die Erfindung betreffender Figuren erläutert.

Figur 1 zeigt die Schnittzeichnung eines gemäß der Erfindung realisierten Ausführungsbeispiels für eine optische Vorrichtung zum Messen geringer Druckdifferenzen mittels Lichtintensitätsänderung.
Fig. 2 zeigt den für die Druckmessung wesentlichen optischen Teil einer solchen Vorrichtung.

0025564

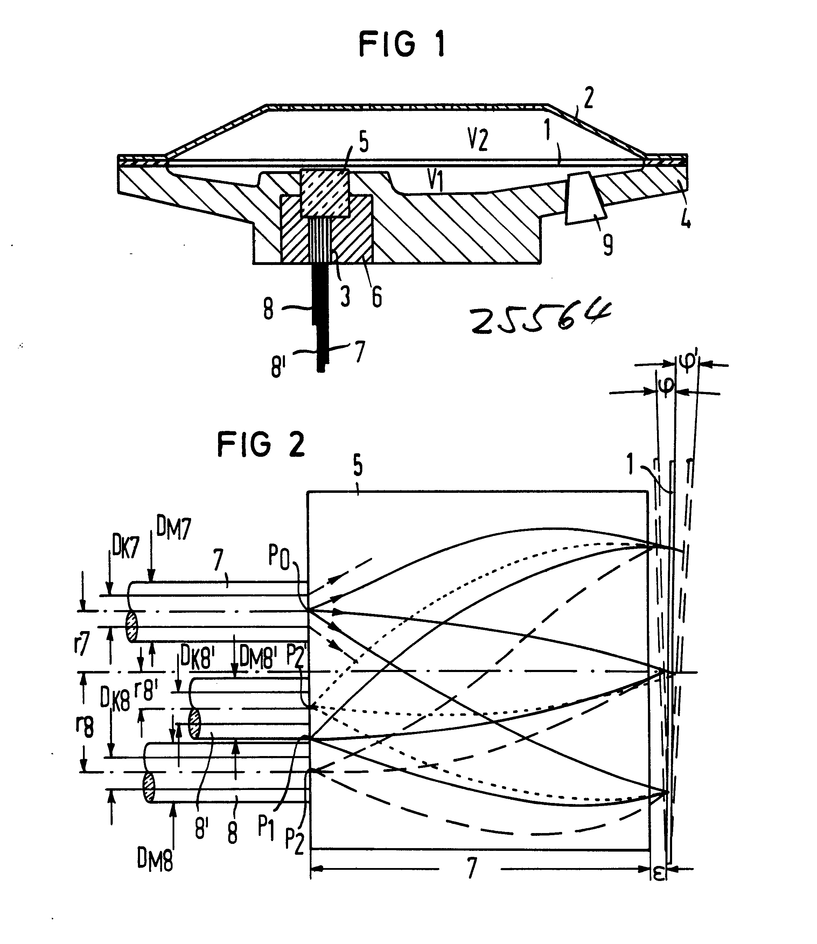

Wie bereits angegeben, zeigt Figur 1 die Schnittzeichnung eines gemäß der Erfindung realisierten Ausführungsbeispiels für eine optische Vorrichtung zum Messen geringer Druckdifferenzen. Das über eine Eingangsfaser 7
ankommende Licht gelangt über eine Gradientenlinse 5 auf
eine durch Druck gebogene, auf der der Gradientenlinse 5
zugewandten Seite verspiegelte Membran 1. Die Membran 1
besteht beispielsweise aus einem dünnen, gespanntem
Kunststoffhäutchen. Die vorzugsweise aufgedampfte
Spiegelschicht, die als Reflektor wirkt, befindet sich wie
die Gradientenlinse 5 am Ort maximaler Winkelauslenkung
der Membran 1. Das reflektierte und damit durch die durch
Druckeinwirkung in seiner Ausbreitungsrichtung variierte
Licht gelangt wieder in die Gradientenlinse 5 und wird
durch sie in eine Ausgangsfaser 8 bzw. eine weitere Ausgangsfaser 8' eingekoppelt. Der entsprechend dem
Druck variable Einkopplungsgrad ist dabei abhängig von
der jeweiligen Spiegelauslenkung, was anschließend noch
näher erläutert wird. Die Änderung der Ausbreitungsrichtung des Lichtes wird somit in eine Intensitätsänderung des wieder in einer Faser geführten Lichtes umgesetzt. Die Eingangsfaser 7, die Ausgangsfaser 8 und
die weitere Ausgangsfaser 8' sind in einer Faserhalterung
6 mit der Gradientenlinse 5 verbunden. 3 bezeichnet z.B.
einen optischen Kleber. Die Fasern müssen in definierter
Lage mit sehr engen Toleranzen in Bezug auf den Abstand
der Faserachsen zueinander und den Abstand der Faserachsen zur Linsenachse justiert sein. Diese Justierung
kann z.B. mit Hilfe von Führungsnuten vorgenommen werden,
die in der Faserhalterung 6 angebracht sind. Für die Herstellung solcher Führungsnuten existieren verschiedene bekannte Techniken, z.B. das Vorzugsätzen in Silizium.
Das Membran-Material kann z.B. "Kapton" oder"Teflon sein.

0025564

Bei dem gezeigten Ausführungsbeispiel für die Erfindung ist im übrigen eine Schutzkappe 2 vorgesehen, die die Membran vor störenden Einwirkungen schützt.

Figur 2 zeigt, wie bereits erwähnt, den für die Druckmessung wesentlichen optischen Teil einer erfindungsgemäßen Vorrichtung. Es ist gezeigt, wie das in der Eingangsfaser 7 geführte Licht an der Stoßstelle Faser-Gradientenlinie in einem Bereich vom Eingangsfaser-Kerndurchmesser $D_{K7}$ um einen Ort $P_0$ in die Gradientenlinse 5 eintritt. Die Linsenlänge Z der Gradientenlinse wird zu $Z = Z_0/4$ gewählt. $Z_0 = 2 \pi / \sqrt{A}$ ist dabei die sog. Pitchlänge. A ist eine Konstante. Mit dieser Linsenlänge Z wird das Licht einer Punktlichtquelle am Ort $P_0$ in einen Parallelstrahl an der gegenüberliegenden Stirnfläche der Gradientenlinse transformiert. In einem geringen Abstand $\varepsilon$ in Ruhelage von dieser ebenen Stirnfläche ist die Membran 1 im Bereich maximaler Winkelauslenkung angebracht. Der Abstand $\varepsilon$ soll nur geringfügig größer als die bei einer auftretenden Maximalauslenkung $\varphi_{max}$ in Richtung Z eintretende Verschiebung der Membran 1 sein. Mit $P_1$ ist in Figur 2 der Bildpunkt von $P_0$ für die Ruhelage bezeichnet. $P_2$ bezeichnet den Durchstoßpunkt der Achse der Augangsfaser 8 in der Kontaktebene der beiden Stirnflächen. $P_2'$ bezeichnet den Durchstoßpunkt der Achse der weiteren Ausgangsfaser 8'. Die Lage von $P_2$ bzw. $P_2'$ kann, wie in Figur 2 gezeigt oder hiervon verschieden gewählt werden. Ebenso können die Kerndurchmesser $D_{K7}$, $D_{K8}$ und $D_{K8'}$, die Manteldurchmesser $D_{M7}$, $D_{M8}$ und $D_{M8'}$ sowie die Achsabstände $r_7$, $r_8$ und $r_8'$ der Faserachsen von der Linsenachse gleich oder verschieden gewählt werden.

Um durch eine Auslenkung $\varphi$ bzw. $\varphi'$ eine möglichst große Verschiebung des Bildespunktes $P_1$ hervorzurufen, ist die Pitchlänge $Z_0$ groß zu wählen, denn zwischen den Koordinaten des Punktes $P_0$ ($x = r_7$) und seines Bildpunktes $P_1(x')$ besteht die Beziehung ($x' = -x + \varphi/(n_0 \sqrt{A}) = -x + \varphi Z_0/(2\pi n_0)$. Die Winkel $\alpha$ der bei $P_0$ eintretenden Strahlen werden im Fall $Z = Z_0/4$ transformiert in $\alpha' = -\alpha . n_0$ bedeutet den Brechungsindex auf der Achse der Gradientenlinse. Mit $n_0 = 1,616$ und $Z_0 =$ 20,8 mm (Werte für einen kommerziellen Linsentyp) gehört zu einer Verschiebung $\Delta x = 100$ /um eine Winkelauslenkung $\varphi = 2,8°$.

Die Ausgangsfaser 8 kann vorteilhafterweise mit einem um den Eingangsfaser- bzw. Ausgangsfaserkerndurchmesser $D_{K7}$ bzw. $D_{K8}$ vergrößerten Achsabstand von der Achse der Gradientenlinse 5 positioniert sein.

Eine Weiterbildung der Erfindung sieht vor, daß der Ausgangsfaserkerndurchmesser $D_{K8}$ und der Kerndurchmesser der weiteren Ausgangsfaser $D_{K8}'$ größer als der Eingangsfaser-Kerndurchmesser $D_{K7}$ sind, daß zwischen der ersten Stirnfläche der Gradientenlinse 5 und der betreffenden Stirnfläche der Ausgangsfaser 8 sowie der betreffenden Stirnflächen der weiteren Ausgangsfaser 8' jeweils eine Blende angeordnet ist, deren Blendendurchmesser gleich oder größer als der Eingangsfaser-Kerndurchmesser $D_{K7}$ ist, und daß die Blende derart positioniert ist, daß der Bildpunkt $P_1$ in der Ruhelage der Membran 1 abgedeckt ist.

Der Ausgangsfaser-Kerndurchmesser $D_{K8}$ und der Kerndurchmesser der weiteren Ausgangsfaser $D_{K8}'$ werden vorteilhafterweise so groß gewählt, daß bei einer Auslenkung durch einen maximalen bzw. minimalen Druck der Bildbereich des Kernes der Eingangsfaser 7 noch im
Bereich des Kernes der Ausgangsfaser 8 bzw. im Bereich
des Kernes der weiteren Ausgangsfaser 8' liegt.

Ein weiteres, nicht gezeigtes Ausführungsbeispiel sieht
vor, daß die Ausgangsfaser 8 und die weitere Ausgangsfaser 8' jeweils durch ein aus mehreren Bündelfasern
zusammengesetzes Faserbündel ersetzt sind.

Außer den bereits genannten Werkstoffen für die Membran
"Kapton" oder "Teflon" kann vorteilhafterweise auch
der Werkstoff "Hostaphan" verwendet werden. Dieser Werkstoff hat ebenfalls, wie die beiden zuvor genannten Werkstoffe, für den erfindungsgemäßen Verwendungszweck ausreichende technische Werte.
Die Gradientenlinse 5 wird vorteilhafterweise an dem Ort
der maximalen Membranhübe angeordnet. Außerdem ist die
Membran 1 derart dimensioniert, daß durch die Druckeinwirkung die größtmögliche Auslenkung $\varphi$ bzw. $\varphi'$ auftritt.

Zum Messen der Druckdifferenz zwischen zwei Volumina
kann die erfindungsgemäße Vorrichtung mit ihrem Meßkörper 4 druckdicht in einer Trennwand zwischen den beiden Volumina befestigt werden, wobei der druckdichte Verschluß 9 entfernt ist, so daß ein Messen der Druckdifferenz der beiden Volumina ermöglicht ist.

Ebenso ist die Verwendung der erfindungsgemäßen optischen Vorrichtung als reine Drucksonde möglich. Dazu
wird die erste Kammer $V_1$ mit einem unter einem Referenzdruck stehenden Hilfsmedium gefüllt, wobei die erste
Kammer $V_1$ mittels des druckdichten Verschlusses 9 gegenüber der Umgebung isoliert ist, so daß ein Messen der
Differenz zwischen dem Referenzdruck und dem Umgebungsdruck ermöglicht ist.

Als Lichtquelle zum Einspeisen einer Lichtleistung
in die Eingangsfaser 7 kann vorteilhafterweise eine lichtemittierende Diode (LED) verwendet werden. Des weiteren
kann vorteilhafterweise als Lichtquelle eine Laserdiode
(LD) verwendet werden.

Die erfindungsgemäße optische Vorrichtung erlaubt das
Messen extrem geringer Druckänderungen. Zur Abschätzung
der Empfindlichkeit kann von der statischen Biegelinie
einer fest eingespannten Membran ausgegangen werden.

Der Anteil des wiedereingekoppelten Lichtes hängt von
der Winkelauslenkung der Membran an der Stelle der Reflexion ab. Für die maximale Winkelauslenkung $\varphi_{max}$ ergibt sich:

$$tg\,\varphi_{max} = \frac{1}{2\sqrt{3}} \cdot \frac{p \cdot a^3 (1 - \chi^2)}{E \cdot h^3}$$

| | |
|---|---|
| p | Druck |
| a | Membranradius |
| $\chi$ | Poissonzahl |
| h | Membrandicke |
| E | Elastizitätsmodul |

Aus dieser Gleichung ergibt sich z.B. für eine 14 /um
dicke Kapton-Membran mit 20 mm Radius, daß eine Druckänderung von 1 bar eine Auslenkung des reflektierten
Lichtes über den gesamten Faserradius von ca. 50 /um zur
Folge hat.

Durch Verwendung dünnerer Membranen oder Vergrößerung
ihres Durchmessers kann die Empfindlichkeit noch erhöht werden.

0025564

Der zunächst als gering erscheinende Dynamikbereich der Druckmessung -Druckänderungen können nur verfolgt werden, solange das Licht nicht vollständig neben die abgehenden Fasern reflektiert wird - erscheint zunächst von Nachteil. Dieser Umstand kann jedoch dadurch leicht umgangen werden, daß entweder die Membran unempfindlicher gewählt wird oder durch Druckausgleich zwischen der ersten Kammer $V_1$ und der zweiten Kammer $V_2$ jeweils von einer neuen, fiktiven Nullstellung ausgegangen wird.

Gemäß einer Weiterbildung der Erfindung ist die Gradientenlinse 5 verschiebbar angeordnet, so daß sie je nach geforderter Empfindlichkeit der Druckmessung Orten unterschiedlicher Membranhube gegenüberliegen kann.

Die getrennte Signalisierung von Druckabweichungen nach oben bzw. nach unten von einem vorbestimmbaren Referenzdruck erlaubt vorteilhafterweise eine besonders einfache Auswertung für Regelzwecke.

Ebenso werden keine hohen Anforderungen an die Genauigkeit der Lichtintensität des der Eingangsfaser 7 zugeführten Lichts gestellt, weil auf einfache, an sich bekannte Weise durch Meß- und Auswerte-Einrichtungen alle drei Lichtintensitäten, nämlich die in der Eingangsfaser 7 und die in den beiden Ausgangsfasern 8 bzw. 8' herrschenden Lichtintensitäten zueinander in Beziehung gesetzt werden, können und die Absolutwerte somit weitgehend ohne Bedeutung sein können.

18 Patentansprüche

2 Figuren

Patentansprüche

1. Optische Vorrichtung zum Messen geringer Druckdifferenzen mittels Lichtintensitätsänderung, bei der
eine Gradientenlinse mit einer Linsenlänge, die ein
Viertel der Pitchlänge beträgt, vorgesehen ist,
deren erster Stirnfläche über eine Eingangsfaser Licht
zuführbar und über eine Ausgangsfaser ein Teil des
reflektierten Lichts entnehmbar ist, bei der ein Meßkörper vorgesehen ist, in dem eine zumindest teilweise
verspiegelte Membran derart eingespannt ist, daß
sie mit ihrer verspiegelten Fläche in ihrer Ruhelage
flächenparallel in einem Abstand, der geringfügig größer
als eine zu erwartende Maximalauslenkung der Membran
ist, zu der zweiten Stirnfläche der Gradientenlinse
positioniert ist, und bei der die Gradientenlinse derart
positioniert ist, daß ihre zweite Stirnfläche der Membran
außermittig gegenüberliegt, so daß durch durch Druckeinwirkungen verursachte Durchbiegungen der Membran der
Strahlengang des Lichts innerhalb der Gradientenlinse
infolge des veränderten Einfallswinkels an ihrer
verspiegelten Fläche in Bezug auf einen Bildpunkt auf
der ersten Stirnfläche der Gradientenlinse, der bei der
vorgegebenen Linsenlänge aus einem Ort einer durch die
optische Achse der Eingangsfaser repräsentierten Punktlichtquelle gegeben ist, verschiebbar ist, dadurch
gekennzeichnet, daß zwischen der Membran (1) und
dem Meßkörper (4) eine erste Kammer ($V_1$) mit einem ersten
Volumen und zwischen der Membran und einer Schutzkappe (2)
eine zweite Kammer ($V_2$) mit einem zweiten Volumen vorgesehen sind, daß die erste Kammer ($V_1$) mit einem druckdichten Verschluß (9) gegenüber der Umgebung isolierbar
ist, daß die Eingangsfaser (7) an eine Lichtquelle vorgegebener Lichtleistung angeschlossen ist, daß zusätzlich

0025564

zu der in einem Ausgangsfaser-Achsabstand ($r_8$) von der Achse der Gradientenlinse (5) angeordneten Ausgangs-faser (8) eine weitere Ausgangsfaser (8') in einem ver-minderten Ausgangsfaser-Achsabstand ($r_8'$) angeord-net ist, daß der Druck in der ersten Kammer ($V_1$) so ein-gestellt ist, daß die Membran (1) bei einem mittleren in der zweiten Kammer (V2) herrschenden Druck innerhalb eines vorgegebenen Druckbereiches ihre Ruhelage einnimmt, und daß die beiden Ausgangsfaser-Achsabstände ($r_8$, $r_8'$) so gewählt sind, daß der Bildpunkt ($P_1$) des Ortes ($P_0$) bei mittleren Druck zwischen den beiden Ausgangsfasern (8,8') bei erhöhtem Druck im Bereich der Ausgangsfaser (8) und bei vermindertem Druck im Bereich der weiteren Augangsfaser (8') liegt, und daß jede der Ausgangsfasern (8,8') mit einer die übertragene Lichtleistung bewertenden Meßvorrichtung verbunden ist.

2. Optische Vorrichtung nach Anspruch 1, dadurch gekennzeichnet, daß die Pitchlänge so groß zu wählen ist, daß eine der Fasergeometrie und dem Faserabstand angepaßte Bildpunktverschiebung erzielbar ist.

3. Optische Vorrichtung nach Anspruch 1, dadurch gekennzeichnet, daß die Gradientenlinse (5) an dem Ort angeordnet ist, an dem die maximalen Membranhübe auftreten, und daß die Membran (1) derart dimensioniert und eingespannt ist, daß durch die Druckeinwirkung die größtmögliche Auslenkung ($\varphi, \varphi'$) auftritt.

4. Optische Vorrichtung nach Anspruch 1, dadurch gekennzeichnet, daß die Gradientenlinse (5) verschiebbar ange-ordnet ist, so daß sie je nach geforderter Empfindlichkeit der Druckmessung Orten unterschiedlicher Membranhübe gegenüberliegen kann.

0025564

5. Optische Vorrichtung nach Anspruch 1, dadurch gekennzeichnet, daß in dem Meßkörper (4) eine Faserhalterung (6) angeordnet ist, die mit einem Befestigungsmittel, vorzugsweise einem optischen Kleber (3), fixiert ist, und daß die Faserhalterung (6) Führungsnuten aufweist, mittels derer die Eingangsfaser (7), die Ausgangsfaser (8) und die weitere Ausgangsfaser (8') in einem vorgegebenen Eingangsfaser-Achsabstand ($r_7$) bzw. vorgegebenen Ausgangsfaser-Achsabständen ($r_8$, $r_8'$) von der Achse der Gradientenlinse (5) gehalten werden.

6. Optische Vorrichtung nach einem der vorhergehenden Ansprüche, dadurch gekennzeichnet, daß der Eingangsfaser-Kerndurchmesser ($D_{K7}$), der Ausgangsfaser-Kerndurchmesser ($D_{K8}$) und der Kerndurchmesser der weiteren Ausgangsfaser ($D_{K8}'$) gleich sind, daß der Eingangsfaser-Manteldurchmesser ($D_{M7}$), der Ausgangsfaser-Mantel-durchmesser ($D_{M8}$) und der Manteldurchmesser der weiteren Ausgangsfaser ($D_{M8'}$) gleich sind und daß der Ausgangsfaser-Achsabstand ($r_8$) so gewählt ist, daß ein durch die optische Achse der Ausgangsfaser (8) gegebener Durchstoßpunkt ($P_2$) mit dem durch eine Arbeitslage der Membran (1) und dem durch die Lage der optischen Achse der Eingangsfaser (7) vorgegebenen Ort ($P_0$) bestimmten Bildpunkt ($P_1$) identisch ist.

7. Optische Vorrichtung nach einem der vorhergehenden Ansprüche, dadurch gekennzeichnet, daß der Eingangsfaser-Kerndurchmesser ($D_{K7}$), der Ausgangsfaser-Kerndurchmesser ($D_{K8}$) und der Kerndurchmesser der weiteren Ausgangsfaser ($D_{K8}'$) gleich sind, daß der Eingangsfaser-Manteldurchmesser ($D_{M7}$), der Ausgangsfaser-Manteldurchmesser ($D_{M8}$) und der Manteldurchmesser der weiteren Ausgangsfaser ($D_{M8}'$) gleich sind und daß der verminderte Ausgangsfaser-Achsabstand ($r_8'$) so gewählt ist, daß ein durch die optische Achse der weiteren Ausgangsfaser (8') gegebener weiterer Durchstoßpunkt ($P_2'$) mit dem durch eine andere Arbeitslage der Membran (1) und dem durch die Lage der optischen Achse der Eingangsfaser (7) vorgegebenen Ort ($P_o$) bestimmten Bildpunkt (P1) identisch ist.

8. Optische Vorrichtung nach Anspruch 6, dadurch gekennzeichnet, daß die Ausgangsfaser (8) mit einem um den Eingangsfaser- bzw. Ausgangsfaser-Kerndurchmesser ($D_{K7}$ bzw. $D_{K8}$) vergrößerten Achsabstand von der Achse der Gradientenlinse (5) positioniert ist.

9. Optische Vorrichtung nach einem der Ansprüche 1 bis 5, dadurch gekennzeichnet, daß der Ausgangsfaser-Kerndurchmesser ($D_{K8}$) und der Kerndurchmesser der weiteren Ausgangsfaser ($D_{K8'}$) größer als der Eingangsfaser-Kerndurchmesser ($D_{K7}$) sind, daß zwischen der ersten Stirnfläche der Gradientenlinse (5) und der betreffenden Stirnfläche der Ausgangsfaser (8) sowie der betreffenden Stirnfläche der weiteren Ausgangsfaser (8') jeweils eine Blende angeordnet ist, deren Blendendurchmesser gleich oder größer als der Eingangsfaser-Kerndurchmesser ($D_{K7}$) ist, und daß die Blende derart positioniert ist, daß der Bildpunkt ($P_1$) in der Ruhelage der Membran (1) abgedeckt ist.

10. Optische Vorrichtung nach Anspruch 9, dadurch gekennzeichnet, daß der Ausgangsfaser-Kerndurchmesser ($D_{K8}$) und der Kerndurchmesser der weiteren Ausgangsfaser (8') so groß zu wählen, daß bei einer Auslenkung
sind
durch einen maximalen bzw. minimalen Druck der Bildbereich des Kernes der Eingangsfaser (7) noch im

0025564

79 P 7169

Bereich des Kernes der Ausgangsfaser (8) bzw. im Bereich
des Kernes der weiteren Ausgangsfaser (8') liegt.

11. Optische Vorrichtung nach einem der Ansprüche
1 bis 5, dadurch gekennzeichnet, daß die Ausgangsfaser
(8) und die weitere Ausgangsfaser (8') jeweils durch
ein aus mehreren Bündelfasern zusammengesetztes Faserbündel ersetzt sind.

12. Optische Vorrichtung nach Anspruch 1, dadurch
gekennzeichnet, daß die Membran (1) aus einem Werkstoff,
vorzugsweise "Kapton", mit einem Elastizitätsmodul
$E \approx 3000 N/mm^2$ besteht und daß die Membran (1) einen Membranradius $a \approx 7,5...25$ mm und eine Membrandicke
$h \approx 4...20$ /um hat.

13. Optische Vorrichtung nach Anspruch 1, dadurch
gekennzeichnet, daß die Membran aus einem Werkstoff,
vorzugsweise "Teflon", mit einem Elastizitätsmodul
$E \approx 300 N/mm^2$ besteht und daß die Membran (1) einen
Membranradius $a \approx 7,5...25$ mm und eine Membrandicke
$h \approx 4...20$ /um hat.

14. Optische Vorrichtung nach Anspruch 1, dadurch
gekennzeichnet, daß die Membran (1) aus einem Werkstoff, vorzugsweise "Hostaphan", mit einem Elastizitätsmodul $E \approx 4500 N/mm^2$ besteht und daß die Membran (1)
einen Membranradius $a \approx 7,5 ...25$ mm und eine Membrandicke $h \approx 4 ... 20$ /um hat.

0025564

79 P 7169

15. Optische Vorrichtung nach einem der vorhergehenden Ansprüche, dadurch gekennzeichnet, daß der Meßkörper (4) druckdicht in einer Trennwand zwischen zwei Volumina befestigt ist und daß der druckdichte Verschluß (9) entfernt ist, so daß ein Messen der Druckdifferenz der beiden Volumina ermöglicht ist.

16. Optische Vorrichtung nach einem der Ansprüche 1 bis 14, dadurch gekennzeichnet, daß das erste Volumen ($V_1$) mit einem unter einem Referenzdruck stehenden Hilfsmedium gefüllt ist und daß das erste Volumen ($V_1$) mittels des druckdichten Verschlusses (9) gegenüber der Umgebung isoliert ist, so daß ein Messen der Differenz zwischen dem Referenzdruck und dem Umgebungsdruck ermöglicht ist.

17. Optische Vorrichtung nach einem der vorhergehenden Ansprüche, dadurch gekennzeichnet, daß als Lichtquelle eine lichtemittierende Diode (LED) vorgesehen ist.

18. Optische Vorrichtung nach einem der Ansprüche 1 bis 16, dadurch gekennzeichnet, daß als Lichtquelle eine Laserdiode (LD) vorgesehen ist.

# FIG 1

2
1
V2
V1
5
9
4
3
6
8
8'
7

25564

# FIG 2

5
DM7
DK7
7
P0
1
φ'
φ
DK8'
DM8'
P2
r7
DK8
r8'
r8
P1
P2
8'
8
DM8
7
ε